# EUROPÄISCHE PATENTSCHRIFT

(11) **EP 0 829 322 B1**
(45) Veröffentlichungstag und Bekanntmachung des Hinweises auf die Patenterteilung: **08.11.2000**
(21) Anmeldenummer: 97115449.7
(22) Anmeldetag: 06.09.1997
(51) Int. Cl.: B23D 25/12

(54) **Hochgeschwindigkeitsschere zum Querteilen von Walzband**
High speed shear for transverse cutting of rolled strip
Cisaille à grande vitesse pour le tronçonnage de feuillard laminé

(30) Priorität: 17.09.1996 DE 19637862
(43) Veröffentlichungstag der Anmeldung: 18.03.1998
(73) Patentinhaber: SMS Demag AG, 40237 Düsseldorf (DE)
(72) Erfinder: Rosenthal, Dieter, 57572 Niederfischbach (DE); Kalteich, Friedhelm, 57258 Freudenberg (DE); Braun, Martin, 57223 Kreuztal (DE); Fuhrmann, Karl-Friedrich, 57571 Hilchenbach (DE); Krämer, Stephan, 57271 Hilchenbach (DE); Kneppe, Günter, Dr., 57271 Hilchenbach (DE)
(74) Vertreter: Valentin, Ekkehard, Dipl.-Ing.

(56) Entgegenhaltungen:
- DE-A- 1 402 427
- DE-A- 2 138 478
- DE-A- 2 718 794
- DE-A- 4 128 970
- FR-A- 1 091 500
- GB-A- 2 156 726
- US-A- 4 512 225

## Beschreibung

Die Erfindung betrifft eine fliegende Schere mit auf einander gegenüberliegenden Trommeln angeordneten Messerkanten, die durch mindestens eine ihnen zugeordnete Antriebsvorrichtung auf eine der Geschwindigkeit des zu schneidenden Bandes entsprechende Umfangsgeschwindigkeit beschleunigbar sind und bei der mindestens einer der Trommeln eine separat ansteuerbare Anstellvorrichtung zugeordnet ist, wobei eine Synchronisation zwischen den Anstellantrieben und der Antriebsvorrichtung vorgesehen ist.

Bei der Erstellung von Warmbreitband wird immer mehr dazu übergegangen endlos zu walzen. Das Einsatzmaterial wird durch Verschweißen von Vorbändern oder in Gießmaschinen erzeugt. Warmbreitband wird aber auch im Zuge eines Semiendloswalzverfahrens erstellt, bei dem das Einsatzmaterial mehrfache Vorbandlängen aufweisen kann, die auf Rollgängen, Rollenherdöfen oder in Coilboxen zwischengelagert sein können.

Das Fertigband muß nach dem Warmwalzvorgang auf die den geforderten Coilgewichten entsprechenden Bandlängen geschnitten werden. Der Schnitt soll im Kontibetrieb, d.h. bei Walzgeschwindigkeit erfolgen. Er muß daher bei heute üblichen Geschwindigkeiten von Warmbreitbandstraßen im Bereich von 5 m/sec. bis zu 30 m/sec. vorzugsweise 10 m/sec. bis 20 m/sec. erfolgen. Die Banddicken liegen dabei zwischen 0,5 mm bis 30 mm vorzugsweise zwischen 0,6 mm bis 1,5 mm.

Bekannte Trommel- bzw, Kurbelscheren, die zum Schneiden von Warmbreitband dienen, sind nicht für derartig hohe Bandgeschwindigkeiten ausgelegt. Aber auch fliegende Scheren, die im Anschluß an Kaltwalz-Tandemstraßen eingesetzt werden arbeiten nur bis zu Bandgeschwindigkeiten von ca. 6 m/sec.

Durch die DE 41 28 970 ist bereits eine gattungsgemäße Abschervorrichtung bekanntgeworden, bei der jedoch sehr aufwendig eine Synchronisation beim Zusammenfahren der beiden Messertrommeln hergestellt wird.

Der Erfindung liegt die Aufgabe zugrunde, fliegende Scheren zum Schneiden von Warmbreitband so weiterzubilden, daß exakte Schnitte bei Bandgeschwindigkeiten von bis zu 30 m/sec. und bei minimalen Banddicken unter geringem Aufwand gewährleistet werden.

Die Aufgabe wird durch die Merkmale des Anspruchs 1 gelöst. Wenn mindestens eine der Trommeln auf Schwingen gelagert ist, die mit den Anstellvorrichtungen verbunden sind, können die Trommeln bzw. die das Band schneidenden Messer mit Bandgeschwindigkeit umlaufen und sobald eine die Schere von dem gewünschten Coilgewicht entsprechenden Bandlänge passiert wurde, können die Schwingen zum Schnitt angestellt werden.

Zur Anstellung können beliebige Antriebe vorgesehen werden. Es hat sich jedoch bewährt, daß die Anstellvorrichtungen als Exzenteranstellungen ausgebildet sind.

Wird eine der beiden Trommeln mit einem Amboß versehen oder aber eine der beiden Trommeln mit einem derart gehärteten Mantel ausgestattet, daß dieser als Amboß eingesetzt werden kann, so entsteht ein Bereich, in dem das Band geschnitten werden kann, der mit einer weniger genauen Synchronisation der beiden Trommeln auskommt.

Wichtig ist, daß die Umfangsgeschwindigkeit von Trommeln auf die Bandvorschubgeschwindigkeit synchronisierbar ist. Dabei sollte die Synchronisierung so erfolgen, daß die Umfangsgeschwindigkeit der Schnittkanten der Messer bzw. die Oberflächengeschwindigkeit des Ambosses oder des Trommelmantels mit der Bandvorschubgeschwindigkeit übereinstimmen.

Wesentlich ist, daß die Anstellvorrichtungen mit der Rotation der Trommel derart synchronisiert, gesteuert und/oder betrieben sind, daß beim Durchlauf der Messer die Anstellbewegungen beendet sind und nach dem Durchlauf rückgeführt werden. Die Messer werden vor dem durchzuführenden Schnitt rechtzeitig auf Bandvorschubgeschwindigkeit gebracht. Für den Schnitt müssen sie nur noch aufeinander zu angestellt werden. Dabei erfolgt die Anstellung so, daß die Anstellbewegung der Messer bzw. des Messers und des Ambosses oder des Trommelmantels zu Beginn des Schnittes abgeschlossen ist und das die Trommeln nach erfolgtem Schnitt wieder auseinandergefahren werden, bevor die Trommel eine weitere Umdrehung und damit einen weiteren Schnitt durchgeführt hat.

Die Synchronisation der Trommeln untereinander und ggf. mit den Anstellvorrichtungen kann über entsprechende Getriebe erfolgen oder aber elektrisch bzw. elektronisch bewerkstelligt werden. Der Anstellhub der Trommeln kann durch zwischen den Getrieben bzw, den entsprechenden Antrieben und den Trommeln vorgesehenen Gelenkspindeln ausgeglichen werden.

Um die Schnitte variieren zu können, sind parallel zu den Anstellvorrichtungen Vorrichtungen zur axialen Verschiebung der Trommeln vorgesehen. Dabei kann die axiale Verschiebung der Trommeln auch während des Schnittes erfolgen.

Werden vorgegeben gekrümmte Messer verwendet, so lassen sich gezielte Formen des Bandanfangs einstellen, mit denen ein zuverlässiger Transport zu der Haspelanlage unterstützt wird.

Die Erfindung wird anhand eines Ausführungsbeispieles näher erläutert. Dabei zeigen
- Fig. 1: die Anordnung der erfindungsgemäßen Schere in einer Warmbreitbandstraße bei der eine der Messertrommeln in einer Linearführung geführt ist,
- Fig. 2: die erfindungsgemäße Schere mit auf Schwingen gelagerten Messertrommeln,
- Fig. 3: die erfindungsgemäße Schere mit auf Schwingen gelagerten Messertrommeln, wobei eine der Trommeln einen Amboß trägt und
- Fig. 4: schematisiert einen Antrieb für die erfindungsgemäße Schere, mittels dessen die mechanische Synchronisation erreicht wird.

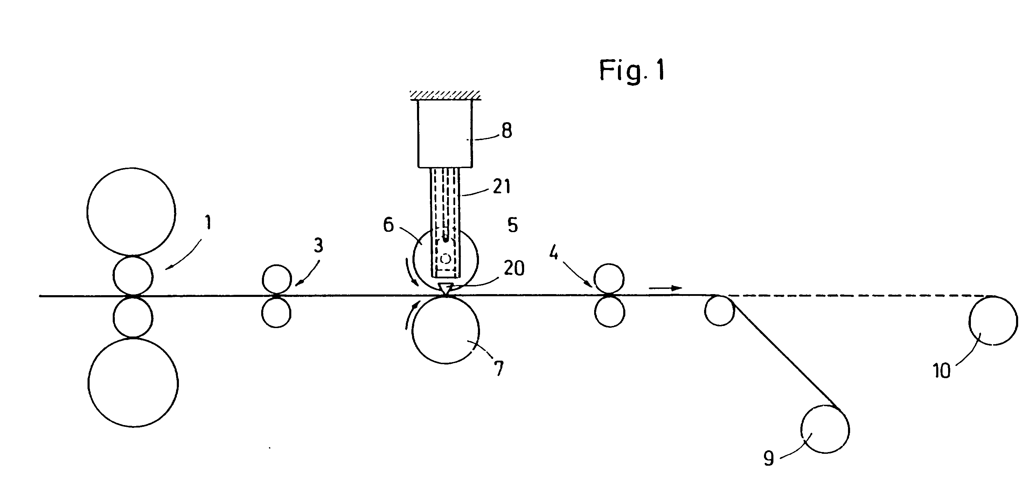

Fig. 1 zeigt das letzte Gerüst 1 einer Warmbreitbandstraße, in der endloses Band 2 auf gewünschte Abmessungen heruntergewalzt worden ist. Der Warmbreitbandstraße folgt ein Treiber 3, zwischen dem und einem weiteren Treiber 4 eine Schere 5 zum Schneiden des Endlosbandes vorgesehen ist. Die Schere 5 besteht aus den Trommeln 6, 7, deren Umfangsgeschwindigkeit mit der Bandgeschwindigkeit übereinstimmt. Die Bandgeschwindigkeit wird entweder von der Drehzahl des Treibers 3 oder von einem nicht gezeigten Aufnehmer abgeleitet. Die in Linearführungen 21 geführte Trommel 6 kann vermittels von Anstellvorrichtungen 8 getrennt von ihrem nicht gezeigten Rotations- Antriebsvorrichtung auf die Trommel 7 zu angestellt werden, um so den Schnitt auszuführen. Dabei weist die Trommel 6 das Messer 20 auf, während die Trommel 7 mit einem besonders gehärteten Mantel versehen ist, welcher als Gegenmesser dient. Das Band wird auf einen Haspel 9 aufgewickelt. Nach erfolgtem Schnitt wird der Bandanfang zum Haspel 10 geleitet und von diesem aufgewickelt, während das fertige Coil vom Haspel 9 abgenommen werden kann.

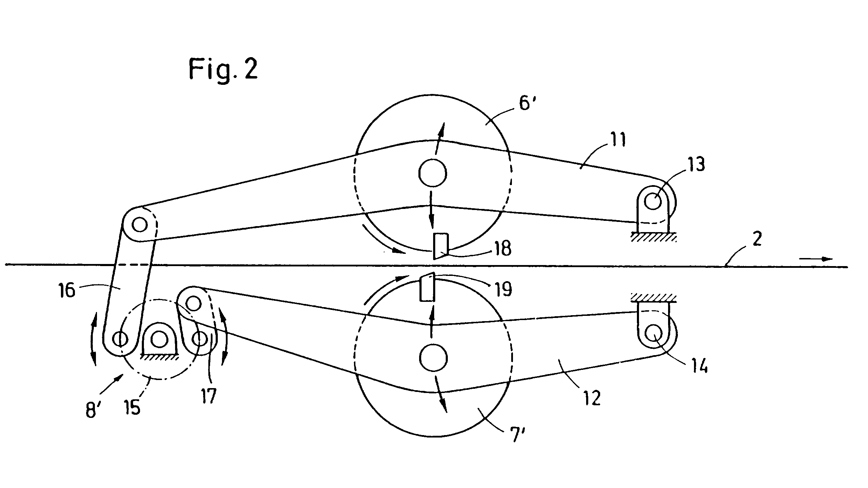

In Fig. 2 ist das Band 2 sowie die Trommeln 6', 7' zu erkennen. Die Trommeln 6', 7' sind auf Schwingen 11, 12 gehalten. Je ein Ende der Schwingen ist an einem Drehpunkt 13, 14 gelagert. Am jeweils anderen Ende der Schwingen 6', 7' greift die Anstellvorrichtung 8' an. Bei der Anstellvorrichtung 8' handelt es sich um einen Exzenterantrieb, dessen Anstellexzenter 15 über gelenkig mit den Schwingen 11, 12 verbundene Zuglaschen 16, 17 verbunden ist. Es bedarf lediglich einer Viertelumdrehung des Anstellexzenters 15, um die freien Enden der Schwingen 11, 12 aufeinander zu zu bewegen und damit die Trommeln 6', 7' zum Schnitt zu führen.

Auf den Trommeln 6', 7' sitzen Messer 18, 19. Die Trommeln 6', 7' sind über nicht gezeigte Vorrichtungen mechanisch bzw. elektrisch bzw. elektronisch miteinander synchronisiert, so daß die Messer 18, 19 unter Einhaltung eines entsprechenden Schnittspaltes zum Schnitt gelangen.

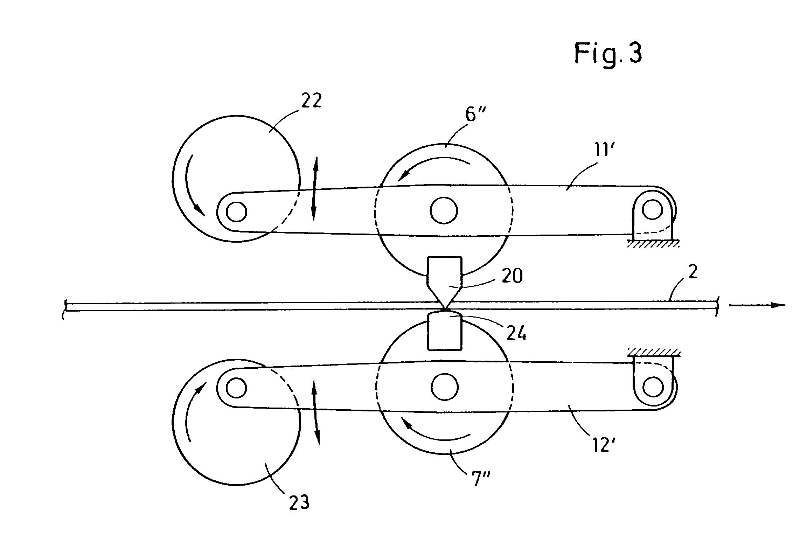

Fig. 3 zeigt Schwingen 11', 12', welche die Trommeln 6'', 7'' halten. Die freien Enden der Schwingen 11', 12' sind mit Anstellexzentern 22, 23 verbunden, wobei die nicht gezeigten Antriebe der Anstellexzenter 22, 23 untereinander und mit den Trommeln 6'', 7'' synchronisiert sein können. Anstelle der Anstellexzenter 22, 23 können beliebig andere Anstellvorrichtungen 8, z.B. Kolben-Zylinder-Einheiten, vorgesehen werden.

Auf der Trommel 6'' ist ein Messer 20 angeordnet, während die Trommel 7'' einen Amboß 24 trägt. Die Synchronisation zwischen den Trommeln 6'' und 7'' muß in diesem Falle nicht so exakt sein wie z.B. bei den Trommeln 6', 6' nach Fig. 2, da der Amboß 24 dem Messer 20 einen großen Schnittbereich bietet.

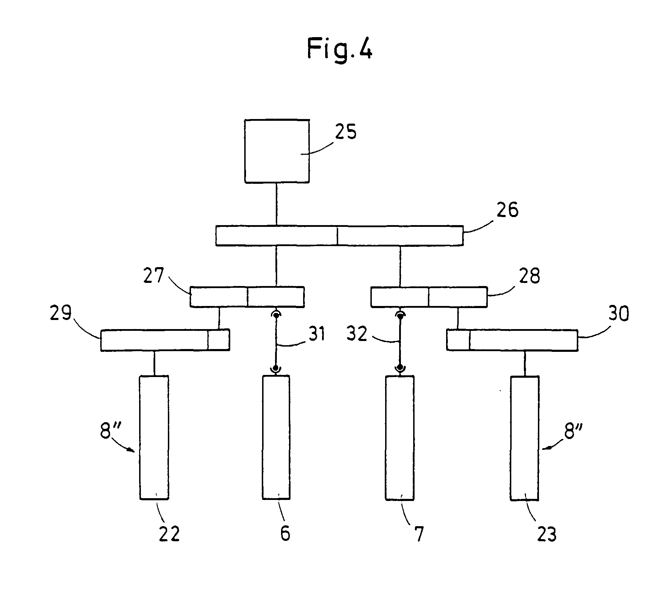

Fig. 4 zeigt eine Antriebseinheit 25, die mit einem Hauptkammwalzgetriebe 26 verbunden ist. Das Hauptkammwalzgetriebe 26 arbeitet auf ein Kammwalzgetriebe 27 für die Trommel 6 sowie ein Kammwalzgetriebe 28 für die Trommel 7. Vom Kammwalzgetriebe 27 wird über ein Getriebe 29 die Anstellkraft für die Anstellexzenter 22 abgeleitet, während die Anstellkraft für den Anstellexzenter 23 vom Kammwalzgetriebe 28 über ein Getriebe 30 übertragen wird. Über die Getriebe 26, 27, 28 sind die Trommeln 6, 7 mechanisch miteinander synchronisiert. Weiterhin ist eine Synchronisation zwischen den Anstellexzentern 22, 23 einerseits und zwischen den Trommeln 6, 7 über die Getriebe 26 bis 30 gegeben. Wird z.B. nur ein Anstellexzenter 22 verwendet, so können die Getriebe 28 und 30 entfallen. Die Trommeln 6, 7 werden über Gelenkwellen 31, 32 angetrieben, welche die Bewegung zwischen den feststehenden Getrieben 26 bis 28 und den aufeinander zu beweglichen Trommeln 6, 7 auszugleichen vermögen. Eine Synchronisation der Trommeln und der Anstellvorrichtungen auf elektrische bzw. elektronische oder aber auf hydraulische Weise, die ebenfalls Gegenstand der Erfindung sind, werden hier jedoch nicht gezeigt.

Die erfindungsgemäße Schere wird eingesetzt, um das mit hoher Geschwindigkeit laufende endlose Warmband in die gewünschten Coilgewichten entsprechenden Längen zu unterteilen. Bei Geschwindigkeiten des Warmbreitbandes bis zu 30 m/sec und bei Banddicken bis hinunter zu 0,5 mm lassen sich die Endlosbänder nicht mehr sicher in die Warmbreitbandstraßen einfädeln. Daher werden die Gerüste z.B. nur auf einen Spalt von ca. 1,5 mm angestellt und der Bandanfang mit dieser Anstellung gewalzt, bis der entsprechende Zug vom Aufwickelhaspel aufgebracht werden kann. Nun können die Gerüste der Warmbreitbandstraße bis auf 0,5 mm angestellt werden. Sobald die ersten Bandbereiche mit der gewünschten Enddicke die Schere passiert haben, wird diese zum Schnitt angestellt. Ähnlich wird, bevor das Bandende in die Walzstraße einläuft, der Walzspalt wieder auf ca. 1,5 mm angestellt und bevor das nunmehr dickere Band die Schere passiert, diese zum Schnitt angestellt.

Das hier für Warmbreitband offenbarte Schersystem läßt sich analog auf Kaltwalzstraßen verlassendes Kaltband anwenden.

### Bezugszeichenübersicht

- 1: letztes Gerüst
- 2: Band
- 3: Treiber
- 4: Treiber
- 5: Schere
- 6: Trommel
- 7: Trommel
- 8: Anstellvorrichtung
- 9: Haspel
- 10: Haspel
- 11: Schwinge
- 12: Schwinge
- 13: Drehpunkt
- 14: Drehpunkt
- 15: Anstellexzenter
- 16: Zuglasche
- 17: Zuglasche
- 18: Messer
- 19: Messer
- 20: Messer
- 21: Linearführung
- 22: Anstellexzenter
- 23: Anstellexzenter
- 24: Amboß
- 25: Antriebvorrichtung
- 26: Hauptkammwalzgetriebe
- 27: Kammwalzgetriebe
- 28: Kammwalzgetriebe
- 29: Getriebe
- 30: Getriebe
- 31: Gelenkwelle
- 32: Gelenkwelle

## Patentansprüche

1. Fliegende Schere mit auf einander gegenüberstehenden Trommeln angeordneten Messerkanten, die durch mindestens eine ihnen zugeordnete Antriebsvorrichtung (25) auf eine der Geschwindigkeit des zu schneidenden Bandes (2) entsprechende Umfangsgeschwindigkeit beschleunigbar sind und bei der mindestens einer der Trommeln (6, 6', 6", 7, 7', 7") eine separat ansteuerbare Anstellvorrichtung (8, 8') zugeordnet ist, wobei eine Synchronisation zwischen den Anstellantrieben und den Antriebsvorrichtungen vorgesehen ist,
**dadurch gekennzeichnet**,
daß mindestens eine der Trommel (6, 6"; 7, 7") auf Schwingen (11, 11'; 12, 12') gelagert ist, die mit den Anstellvorrichtungen (8', 8") verbunden sind.

2. Fliegende Schere nach Anspruch 1,
**dadurch gekennzeichnet**,
daß die Anstellvorrichtungen (8', 8") als Anstellexzenter (15; 22; 23) aufweisenden Exzenteranstellung ausgebildet sind.

3. Fliegende Schere nach einem der Ansprüche 1 oder 2,
**dadurch gekennzeichnet**,
daß eine der Trommeln (6, 6") mit einem Messer (20) und die zweite Trommel (7) mit einem mit diesem zusammenwirkenden Amboß (24) ausgestattet sind.

4. Fliegende Schere nach Anspruch 3,
**dadurch gekennzeichnet**,
daß eine der Trommeln (6) mit einem Messer (20) ausgestattet ist, das mit als Amboß wirkendem Mantelbereich der zweiten Trommel (7) zusammenwirkt.

5. Fliegende Schere nach einem der Ansprüche 1 bis 4,
**dadurch gekennzeichnet**,
daß die Synchronisation elektrisch bzw. elektronisch erfolgt.

6. Fliegende Schere nach einem der Ansprüche 1 bis 5,
**dadurch gekennzeichnet**,
daß parallel zu den Anstellvorrichtungen (8, 8', 8") Vorrichtungen zur axialen Verschiebung der Trommel (6, 6', 6"; 7, 7', 7") vorgesehen sind.

7. Fliegende Schere nach einem der Ansprüche 1 bis 6
**gekennzeichnet durch**
vorgegeben gekrümmte Messer.

## Claims

1. Overhung shears with knife edges, which are arranged on mutually opposite drums and can be accelerated by at least one drive device (25), which is associated therewith, to a circumferential speed corresponding to the speed of the strip (2) to be cut and in which at least one of the drums (6, 6', 6", 7, 7', 7") is associated with an adjusting device (8, 8") separately controllable in drive, wherein a synchronisation is provided between the adjusting drives and the drive devices, characterised in that at least one of the drums (6, 6"; 7, 7") is mounted on rockers (11, 11'; 12, 12'), with which the adjusting devices (8'. 8") are connected.

2. Overhung shears according to claim 1, characterised in that the adjusting devices (8', 8") are constructed as an eccentric adjustment having adjusting eccentrics (15; 22; 23).

3. Overhung shears according to one of claims 1 and 2, characterised in that one of the drums (6, 6") is equipped with a knife (20) and the second drum (7) with an anvil (24) co-operating therewith.

4. Overhung shears according to claim 3, characterised in that one of the drums (6, 6") is equipped with a knife (20) which co-operates with the circumferential surface, which acts as an anvil, of the second drum (7).

5. Overhung shears according to one of claims 1 to 4, characterised in that the synchronisation is effected electrically or electronically.

6. Overhung shears according to one of claims 1 to 5, characterised in that devices for axial displacement of the drums (6, 6', 6"; 7, 7', 7") are provided parallel to the adjusting devices (8, 8', 8").

7. Overhung shears according to one of claims 1 to 6, characterised by knives of predetermined curvature.

## Revendications

1. Cisaille à la volée comprenant des arêtes de couteau agencées sur des tambours mutuellement opposés qui peuvent être accélérés à l'aide d'au moins un dispositif d'entraînement (25) qui leur est associé, jusqu'à une vitesse périphérique correspondant à la vitesse de la bande (2) à couper, et dans laquelle un dispositif d'approche (8, 8') à pilotage séparé est associé à l'un au moins des tambours (6, 6', 6", 7, 7', 7"), et il est prévu une synchronisation entre l'entraînement d'approche et les dispositifs d'entraînement,
caractérisée en ce que l'un au moins des tambours (6, 6" ; 7, 7") est monté sur des bielles (11, 11' ; 12, 12') qui sont reliées au dispositif d'approche (8', 8").

2. Cisaille à la volée selon la revendication 1,
caractérisée en ce que les dispositifs d'approche (8', 8") sont réalisés sous forme de dispositifs d'approche à excentrique présentant des éléments excentriques d'approche (15 ; 22 ; 23).

3. Cisaille à la volée selon l'une ou l'autre des revendications 1 et 2,
caractérisée en ce que l'un des tambours (6, 6") est équipé d'un couteau (20), et le deuxième tambour (7) est équipé d'une enclume (24) qui coopère avec celui-ci.

4. Cisaille à la volée selon la revendication 3,
caractérisée en ce que l'un des tambours (6) est équipé d'un couteau (20), qui coopère avec la région de l'enveloppe du deuxième tambour (7) qui fait office d'enclume.

5. Cisaille à la volée selon l'une des revendications 1 à 4,
caractérisée en ce que la synchronisation a lieu par voie électrique ou électronique.

6. Cisaille à la volée selon l'une des revendications 1 à 5,
caractérisée en ce qu'il est prévu, parallèlement au dispositif d'approche (8, 8', 8"), des dispositifs pour le déplacement axial des tambours (6, 6', 6" ; 7, 7', 7").

7. Cisaille à la volée selon l'une des revendications 1 à 6,
caractérisée par des couteaux à courbure prédéterminée.
